## Europäisches Patentamt
## European Patent Office
## Office européen des brevets

(11) Numéro de publication: **0 034 105**
**B1**

(12) **FASCICULE DE BREVET EUROPEEN**

(45) Date de publication du fascicule du brevet: **29.05.85**

(51) Int. Cl.⁴: **G 07 B 13/00**

(21) Numéro de dépôt: **81430001.8**

(22) Date de dépôt: **04.02.81**

(54) **Procédés et taximètres pour calculer le prix d'une course en taxi.**

(30) Priorité: **07.02.80 FR 8002900**

(43) Date de publication de la demande:
**19.08.81 Bulletin 81/33**

(45) Mention de la délivrance du brevet:
**29.05.85 Bulletin 85/22**

(84) Etats contractants désignés:
**AT BE CH DE GB IT LI SE**

(56) Documents cités:
**FR-A-2 104 061**
**GB-A-1 519 721**
**US-A-3 880 350**
**US-A-3 970 827**
**US-A-4 045 656**
**US-A-4 160 155**

(73) Titulaire: **Ricard, Claude**
**10 Oliveraie G Route de Nice**
**F-13100 Aix-en-Provence (FR)**

(72) Inventeur: **Ricard, Claude**
**10 Oliveraie G Route de Nice**
**F-13100 Aix-en-Provence (FR)**

(74) Mandataire: **Azais, Henri et al**
**c/o CABINET BEAU DE LOMENIE 14, rue Raphael**
**F-13008 Marseille (FR)**

Courier Press, Leamington Spa, England.

## Description

La présente invention a pour objet des procédes et des taximètres pour calculer le prix d'une course en taxi.

La secteur technique de l'invention est celui de la construction des taximètres électroniques.

On rappelle que le prix d'une course en taxi qui est affiché sur un taximètre est obtenu en comparant à tout instant un tarif kilométrique et un tarif horaire et en appliquant chaque fois le plus élevé des deux.

Sur les taximètres mécaniques connus, ce choix est fait automatiquement en comparant les vitesses de rotation de deux pignons qui tournent l'un à vitesse constante et l'autre proportionnellement à la vitesse du véhicule et c'est celui des deux qui tourne le plus vite qui entraîne le compteur de prix.

Les taximètres électroniques connus comportent, d'une part, une horloge qui délivre des impulsions à fréquence constante et, d'autre part, un capteur de distance parcourue qui délivre des impulsions dont le nombre est proportionnel à la distance parcourue par le véhicule.

Les taximètres électroniques comportent une unité de calcul qui établit le prix d'une course en additionnant des prix partiels correspondant à des tranches élémentaires successives dont les longueurs ou les durées peuvent être égales ou inégales. Pour chaque tranche d'une course l'unité de calcul établit le prix partiel en multipliant soit la distance parcourue par le prix tarifé de l'unité de distance, soit le temps écoulé par le prix tarifé de l'unité de temps.

Les taximètres électroniques comportent une unité logique de choix qui décide pour chaque tranche élémentaire de course si l'unité de calcul doit prendre en compte soit la distance parcourue, soit le temps écoulé. Cette unité logique est une partie essentielle d'une taximètre électronique et la précision du calcul du prix dépend en grande partie des critères de choix utilisés dans cette unité logique de choix.

Il existe une vitesse de déplacement du véhicule dite vitesse de conjonction qui est celle pour laquelle le prix d'un tronçon de course est le même si l'on applique le tarif kilométrique ou le tarif horaire.

Différents procédés et dispositifs ont été proposés pour calculer électroniquement les prix partiels avec une précision de l'ordre de ± 1% sur le prix total, qui est la précision requise.

Le brevet FR. 1.514.687 (KIENZLE) décrit un dispositif de comparaison, dit circuit à dépassement, qui comporte une bascule montée en flip-flop, qui reçoit sur chacune de ses deux entrées les impulsions provenant respectivement d'un capteur de distance parcourue et d'une horloge.

Cette bascule est associée à une porte logique et à deux diodes et elle compare la fréquence variable des impulsions de distance à une fréquence d'horloge constante.

Le fonctionnement de ce dispositif est basé sur un capteur de distance et sur une horloge qui délivrent des impulsions de même fréquence lorsque le taxi se déplace à une vitesse égale à la vitesse de conjonction. Or la fréquence du capteur de distance est liée au nombre de tours parcourus par les roues du véhicule en une seconde, et cette fréquence est faible, de l'ordre de quelques hertz. Un tel dispositif n'est pas très précis.

Le brevet GB 1.240.325 (J. F. Bruce SANDERS) ainsi que le brevet U.S. 3.512.706 qui lui correspond, décrivent un taximètre électronique qui comporte à la fois un oscillateur et en capteur de distance qui émet par exemple deux impulsions par tour de l'arbre moteur. Le dispositif comporte des moyens qui permettent de faire cesser le comptage du temps d'attente dès que le taxi se déplace. Lorsque la poignée du taximètre est placée sur la position "occupé", les impulsions de distance parcourue remettent constamment à zéro un diviseur place après l'horloge et aucun temps d'attente n'est facturé.

Selon une variante, le taximètre comporte un oscillateur dont la fréquence correspond à celle du capteur de distance lorsque le taxi se déplace à la vitesse minima ou vitesse de conjonction.

Un dispositif logique composé de deux bascules et de portes laisse passer vers l'unité de comptage des impulsions de distance si leur fréquence est supérieure à cell des impulsions d'horloge.

Ce dispositif, comme le précédent, exige que l'on utilise une horloge dont la fréquence est égale à la fréquence des impulsions de distance lorsque le taxi se déplace à la vitesse de conjonction, ce qui limite beaucoup la précision de ces appareils.

Le brevet U.S. 4.118.775 (P. H. BOYCE) décrit un autre dispositif qui est composé de deux registres de mémoire de type RAM. Dans l'un de ces registres R1, on enregistre un nombre constant d'impulsions, qui correspond au nombre d'impulsions de distance qui seraient délivrées par le capteur de distance, pendant une durée bien déterminée, par exemple pendant une seconde, si le taxi se déplaçait à la vitesse de conjonction. Dans un deuxième registre R2, on enregistre les impulsions de distance délivrées par un capteur de distance. Toutes les secondes, le contenu de R2 est transféré dans une unité de calcul WR et comparé au nombre incrit dans R1. Si R2 est supérieur à R1, on prend en compte R2. Dans le cas contraire, on prend en compte R1.

Ce type de dispositif entraîne des risques d'erreurs importantes lorsque le taxi se déplace au voisinage de la vitesse de conjonction.

En effet, les capteurs de distance couramment employés, sont de capteurs de tours qui sont associés au câble tachymétrique, actionnant le compteur kilométrique et le compteur de vitesse du véhicule, qui est connecté sur l'arbre de sortie de la boîte à vitesses.

Le nombre de tours d'un câble tachymétrique par kilomètre parcouru par le véhicule est compris généralement entre 700 et 1200, c'est-à-dire que chaque tour correspond à une distance parcourue située entre 0,80 m et 1,50 m environ.

Si l'on prend un cas pratique normal où la vitesse de conjonction est de 7,2 Km/heure, où le capteur de distance émet deux impulsions par tour de câble et où le câble tachymétrique effectue 1000 tours par kilomètre parcouru, c'est-à-dire un tour par mètre, on voit que l'on obtient quatre impulsions par seconde à la vitesse de conjonction. Lorsque le taxi roule au voisinage de cette vitesse, on devra donc comparer le nombre d'impulsions de distance émises toutes les secondes au nombre quatre. On voit donc que la position de la première impulsion de distance par rapport au début de chaque période de comparaison peut varier d'une durée égale au quart de la période de comparaison et pour une même vitesse de déplacement du taxi, le nombre d'impulsions de distance comptées par seconde peut donc varier entre trois et cinq d'où une cause d'erreur de prix importante qui dépasse largement les tolérances admises.

Pour remédier à cet inconvénient, on pourrait augmenter la durée des périodes de comparaison pour comparer des nombres plus élevés d'impulsions de distance par périodè. Mais on introduit alors une autre cause d'erreur due à ce que, au cours d'une même période, la vitesse instantanée du taxi peut s'écarter de la vitesse moyenne. On pourrait théoriquement augmenter la fréquence des impulsions de distance, mais on est très vite limité dans cette voie par les contraintes technologiques liées à la construction de capteurs de distance qui ne soient ni trop encombrants ni trop onéreux et on doit considérer que, dans la pratique, les capteurs de distance parcourue connus délivrent au maximum trois impulsions par mètre parcouru, soit six impulsions par seconde à la vitesse de conjonction, tandis que l'on sait construire couramment et pour un prix très bas, de horloges électroniques qui oscillent à la fréquence de 1 KHz.

Il existe des taximètres qui décomptent un nombre d'impulsions prédéterminé correspondant à une somme déterminée et qui incrémentent le prix affiché chaque fois que le nombre d'impulsions décompté atteint le nombre prédéterminé.

Le brevet U.S. 3.970,827 (H. IKUTA et AI) décrit un taximètre de ce type qui comporte un capteur de distance qui émet un nombre d'impulsions proportionnel à la distance parcourue par le taxi, une horloge électronique et des moyens pour comparer la vitesse du taxi à la vitesse de conjonction qui comportent un compteur binaire qui reçoit les impulsions d'horloge et une comparateur qui compare le nombre variable d'impulsions d'horloge émises entre deux impulsions successives du capteur de distance à un nombre constant égal au nombre d'impulsions émises par l'horloge entre deux impulsions successives du capteur de distance lorsque le taxi circule à la vitesse de conjonction.

Le circuit de comparaison commande un circuit de sélection qui laisse passer soit les impulsions d'horloge rendues compatibles avec les impulsions de distance, soit les impulsions de distance selon que la vitesse du taxi est inférieure ou supérieure à la vitesse de conjonction.

Un compteur totalise les impulsions transmises par le circuit de sélection. Lorsque le nombre d'impulsions enregistrées par ce compteur atteint une valeur prédéterminée, le prix affiché est augmenté d'une valeur constante ou saut d'affichage. Ce mode de calcul et d'affichage du prix par sauts successifs amène des erreurs de prix que la présente invention permet d'éliminer.

L'objectif de la présente invention est de procurer des moyens electroniques basés sur un nouveau procédé de découpage d'une course en taxi, en tranches élémentaires successives, très courtes, qui permettent de calculer aisément le prix partiel de chaque tranche élémentaire et qui permettent, lorsque le taxi circule à une vitesse voisine de la vitesse de conjonction, de sélectionner, avec une très grande précision, les tranches de course qui doivent être facturées en fonction de la distance parcourue et celles qui doivent être facturées en appliquant le tarif horaire.

Les procédés selon l'invention pour calculer le prix d'une course en taxi affiché sur un taximètre comportent des opérations connues selon lesquelles on mesure la distance parcourue par le taxi au moyen d'un capteur de distance qui émet un nombre d'impulsions proportionnel à cette distance et on mesure la durée de la course au moyen d'une horloge électronique qui émet des impulsions à fréquence constante et élevée et on compare le nombre variable d'impulsions successives du capteur de distance à un nombre constant égal au nombre d'impulsions émises par l'horloge entre deux impulsions successives du capteur de distance lorsque le taxi circule à la vitesse de conjonction.

L'objectif de l'invention est atteint par un procédé comportant les opérations suivantes:

— on enregistre un nombre constant $p_2$ qui est le prix de l'unité de distance parcourue par le taxi entre deux impulsions successives du capteur de distance et un nombre $p_1$ qui est le prix de l'unité de temps égale à une période d'horloge;
— on compte et on enregistre le nombre variable $n_1$ d'impulsions émises par l'horloge entre deux impulsions successives émises par le capteur de distance;
— on multiplie le nombre $n_1$ par le prix $p_1$ de l'unité de temps;
— si ledit nombre variable ($n_1$) est supérieur audit nombre constant ($n_2$), on sélectionne le produit ($n_1.p_1$) comme prix partiel de la tranche parcourue entre deux impulsions successives du capteur de distance,
— si ledit nombre variable ($n_1$) est inférieur audit nombre constant ($n_2$), on sélectionne ledit premier prix unitaire ($p_2$) comme prix partiel de la tranche parcourue entre deux impulsions successives du capteur de distance,
— de sorte que, dans tous les cas, on sélectionne comme prix partiel de chaque tranche de parcours le plus élevé des deux prix partiels (n1.p1) et (p2);
— et on calcule le prix total que l'on affiche en additionnant lesdits prix partiels.

Selon une variante préférentielle, on ne compare pas directement n1 et n2, et le procédé comporte les opérations suivantes:

— on connecte sur un premier circuit additionneur, d'une part, un premier registre (R3) dans lequel est inscrit un premier prix unitaire (p2) qui est le prix de l'unité de distance parcourue par le taxi entre deux impulsions successives du capteur de distance et, d'autre part, ledit capteur et on augmente le contenu dudit premier circuit additionneur d'une valeur égale audit premier prix unitaire (p2) chaque fois que ledit capteur émet une impulsion;
— on connecte sur un deuxième circuit additionneur, d'une part, un deuxième registre (R4) dans lequel est inscrit un deuxième prix unitaire (p1) qui est le prix de l'unité de temps égale à une période d'horloge et, d'autre part, ladite horloge et on augmente le contenu dudit deuxième circuit additionneur d'une valeur égale audit deuxième prix unitaire (p1) chaque fois que l'horloge émet une impulsion;
— on connecte les sorties desdits circuits additionneurs sur un circuit d'aiguillage sélectif comportant un comparateur qui compare les nombres inscrits dans les deux additionneurs et un démultiplexeur qui aiguille vers la sortie le plus fort des deux;
— et on reboucle la sortie dudit circuit d'aiguillage en parallèle sur lesdits circuits additionneurs de sorte qu'après chaque inpulsion émise par ledit capteur, le plus fort des deux chiffres inscrits dans les deux circuits additionneurs, vient s'inscrire dans les deux circuits additionneurs et on connecte la sortie du deuxième circuit additionneur sur un dispositif d'affichage lumineux.

Un taximètre électronique selon l'invention est du type connu comportant un capteur de distance qui émet des impulsions dont le nombre est proportionnel à la distance parcourue par le taxi, une horloge électronique et des moyens pour comparer la vitesse du taxi à la vitesse de conjonction qui comportent un capteur binaire qui reçoit les impulsions d'horloge et un comparateur qui compare le nombre variable n1 d'impulsions reçues entre deux impulsions successives de distance à un nombre constant n2 qui est égal au nombre d'impulsions émises par l'horloge entre deux impulsions successives de distance lorsque le taxi circule à la vitesse de conjonction.

Un taximètre selon l'invention comporte, en outre:

— un premier registre R1 qui est connecté sur les sorties binaires dudit compteur binaire et la sortie dudit capteur de distance est connectée en parallèle sur les bornes de transfert dudit compteur binaire et dudit premier registre R1;
— un deuxième registre R2 dans lequel est inscrit un nombre constant n1 égal au nombre d'impulsions émises par l'horloge entre deux impulsions de distance lorsque le taxi circule à la vitesse de conjonction;
— un troisième registre R3 dans lequel est inscrit un nombre p2 égal au prix unitaire de la distance constante parcourue par le taxi entre deux impulsions successives dudit capteur de distance;
— un quatrième registre R4 dans lequel est inscrit un nombre p1 égal au prix unitaire d'une durée d'occupation égale à la période de l'horloge;
— un circuit multiplicateur qui est connecté sur les sorties du quatrième registre et du premier registre et qui effectue le produit n1.p1 lors de chaque impulsion du capteur de distance;
— un circuit démultiplexeur comportant deux groupes d'entrées qui sont connectées respectivement sur les sorties du troisième registre R3 et dudit circuit multiplicateur et qui est commandé par un signal logique émis par ledit comparteur, de telle sorte que lors de chaque impulsion émise par le capteur de distance, il transmet le produit n1.p1 si n1 est supérieur à n2 et il transmet le prix p2 inscrit dans le troisième registre R3 si n1 est inférieur à n2;
— et un compteur totalisateur qui est connecté sur les sorties dudit circuit démultiplexeur.

L'invention a pour résultat de nouveaux taximètres électroniques qui sont équipés d'une unité logique qui découpe chaque course en tranches élémentaires successives, d'égale longueur, alors que les taximètres connus procèdent par tranches successives d'égale durée. Ce changement dans le découpage en tranches entraîne une simplification des circuits et une meilleure précision du choix des prix partiels lorsque le taxi circule à une vitesse moyenne voisine de la vitesse de conjonction.

En effet, ce découpage en tranches d'égale longueur entraîne que les comparaisons portent sur des durées de parcours de chaque tranche, lesquelles durées sont mesurées par des nombres d'impulsions d'horloge électronique. Or, l'on sait réaliser couramment des horloges électroniques dont la fréquence est élevée, par exemple de l'ordre du KHz ou plus.

Le choix effectué par les circuits logiques selon l'invention dépend d'une comparaison entre deux nombres élevés d'impulsions d'horloge, par exemple des nombres de quelques centaines et la précision de décision qui est de l'ordre de une à deux impulsions d'horloge est donc très grande.

De plus, le découpage en tranches de longueur égale permet de fractionner la course du taxi en tranches élémentaires très courtes, de l'ordre de la fraction du mètre, qui sont des tranches infinitésimales par rapport à la longueur totale de la course.

Les procédés de découpage en tranches d'égale longueur permet de fractionner la course en un nombre de tranches beaucoup plus élevé qui le procédé de découpage en tranches de durée constante, dans la partie de course qui est parcourue à vitesse supérieure à la vitesse de conjonction qui est généralement la partie la plus coûteuse d'une course en taxi et il permet donc d'améliorer la précision globale du calcul du prix total.

La description se réfère à des modes de réalisation en composants discrets, mais les procédés selon l'invention peuvent être facilement réalisés au moyen de circuits intégrés du type microprocesseur comportant des mémoires dans lesquelles sont enregistrées les opérations successives de découpage en tranches et de comparaison de prix partiels.

La description suivante se réfère aux dessins annexés qui représentent, sans aucun caractère limitatif, des modes de réalisation de taximètres électroniques selon l'invention.

La figure 1 est un bloc diagramme qui représente les parties essentielles d'un taximètre électrique et leurs interconnexions.

La figure 2 est un schéma de l'unité logique de découpage de la course en tranches successives et de choix du prix de chaque tranche élémentaire.

La figure 3 est un schéma d'une variante de réalisation préférentielle de l'unité logique de découpage de la course en tranches successives et de choix du prix partiel de chaque tranche élémentaire.

La figure 4 est un schéma d'un mode de réalisation des circuits de la figure 3.

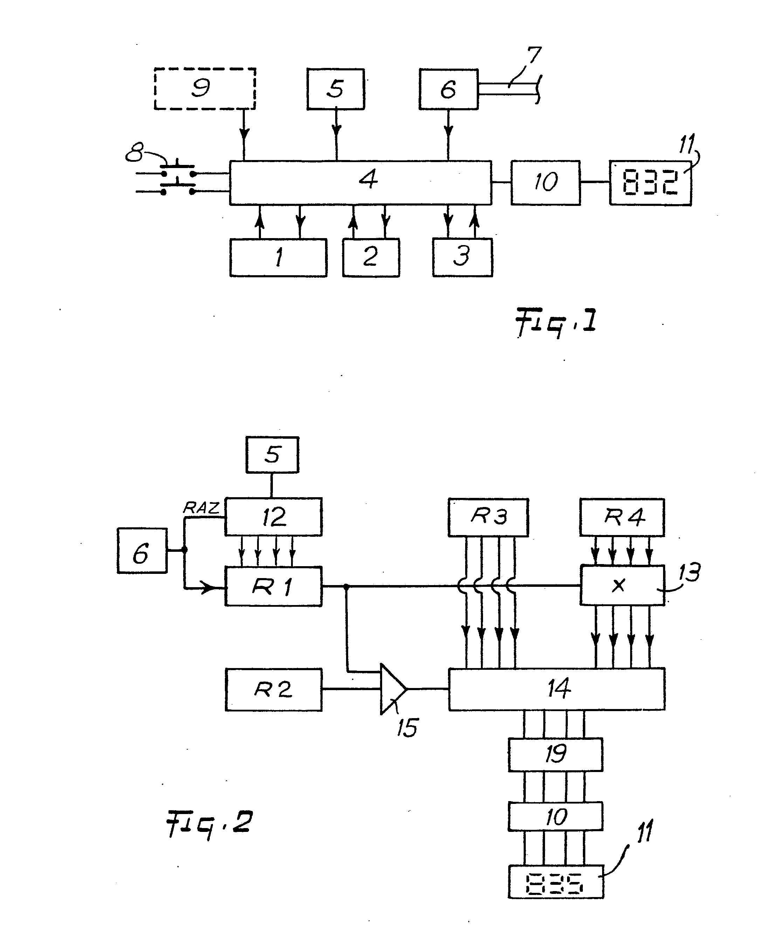

La figure 1 représente très schématiquement les organes essentiels d'un taximètre électronique du type comportant un microprocesseur composé d'une unité centrale de traitement 1 est de mémoires 2, 3 etc. . . . , réalisés sous forme de circuits intégrés à grande échelle (circuits LSI).

Les mémoires 2, 3 etc. . . . comportent des mémoires passives (ROM) et des mémoires à accés direct (RAM).

Les mémoires passives contiennent les informations permanentes nécessaires au fonctionnement du taximètre, notamment les instructions qui fixent le programme de fonctionnement de l'unité centrale 1.

Les mémoires à accés direct contiennent les informations temporelles, notamment les coûts de l'unité de distance et de l'unité de temps selon le tarif utilisé et selon les règlement locaux.

L'unité de calcul 1 est les mémoires communiquent entre elles et avec des organes d'entrée et de sortie des informations par l'intermédiaire d'un circuit d'interface 4.

Les organes d'entrée des informations comportent une horlogé électronique 5 et un capteur 6 qui est connecté sur un câble tachymétrique 7 qui est branché sur l'arbre de sortie de la boîte de vitesses et qui tourne à la même vitesse que cet arbre. Le capteur 6 émet des impulsions dont le nombre est proportionnel au nombre de tours de l'arbre de sortie de la boîte de vitesses et donc à la distance parcourue par le taxi. Les organes d'entrée comportent également des interrupteurs ou des boutons poussoirs 8 qui sont sur le boîtier du taximètre et qui permettent notamment d'indiquer à partir de quel moment le taxi est occupé par un client et quel tarif doit être appliqué selon les règlements locaux qui déterminent plusieurs sortes de tarif, par exemple tarif de jour, tarif de nuit tarif de vile, hors de la ville etc. . . . .

On a représenté en pointillés un organe d'entrée pariculier 9 qui ne fait pas partie du taximètre. Le repère 9 représente une valise de programmation dont dispose le service des poids et mesures ou tout autre service officiel chargé de contrôler le bon fonctionnement du taximètre.

La valise de programmation est connectée par un câble multi-conducteur sur une douille d'entrée prévue sur le taximètre et elle permet de modifier les prix unitaires inscrits dans une mémoire de type RAM chaque fois que la réglementation en vigueur entraîne une modification de ces prix.

Les organes de sortie comportent un circuit de codage 10 et un afficheur lumineux 11 sur lequel apparaît, pendant toute la durée d'une course, le prix de la course.

La figure 1 est une description simplifiée d'un taximètre électronique de type connu. Ce type de taximètre étant connu, il n'est pas utile de donner une description plus détaillée. On a limité cette description aux organes essentiels que l'on retrouve dans la suite de l'exposé.

On rappelle que la difficulté essentielle à résoudre dans un taximètre électronique est de découper une course en tranches élémentaires successives, puis de décider, pour chaque tranche élémentaire, si elle doit être facturée en prenant compte de la distance ou bien de la tranche.

Lorsque le taxi roule à une vitesse voisine de la vitesse de conjonction, ce choix divient difficile et la précision de ce choix constitue une condition essentielle de la bonne précision d'un taximètre.

Comme un taximètre est un instrument destiné à établir un prix public, il est évidemment indispensable que ce prix soit établi avec une bonne précision et sur des critères justes.

Le choix entre un prix kilométrique ou un prix horaire à appliquer à chaque tranche élémentaire dépend évidemment du découpage en tranches choisi, et il sera d'autant plus précis que les tranches successives seront nombreuses et courtes.

Pour fixer les idées, on choisira un exemple numérique qui n'a aucum caractère limitatif, mais qui permettra de préciser les ordres de grandeur. On suppose que l'horloge 5 émet des impulsions dont la fréquence est de 1 KHz. On suppose que le prix de base horaire est de 36 Francs de l'heure, c'est-à-dire 1 centime par seconde et 0,001 centime par impulsion d'horloge. On suppose que le capteur de distance 6 émet une impulsion par mètre parcouru et que le prix de base du kilomètre est de Francs, soit 0,4 centime par mètre.

La vitesse de conjonction pour laquelle les coûts de la distance parcourue et des temps d'occupation s'équilibrent est de 9 Km/heure.

Lorsqu'un taxi circule en ville, sa vitesse est souvent voisine de la vitesse de conjonction et il est très important pour l'exactitude du prix de faire un choix précis lorsque la vitesse est voisine de la vitesse de conjonction.

Lorsque le taxi circule à 9 Km/heure, il parcourt 2,5 m/seconde et le capteur de déplacement émet donc 2,5 impulsions par seconde.

On voit tout de suite que les dispositifs connus qui comparent la fréquence de l'horloge et des capteurs de déplacement ne pourraient pas fonctionner dans ces cas, qui correspond cependant à une horloge électronique et à un capteur de déplacement d'un type courant.

On voit également que les dispositifs de choix qui divisent la course en tranches d'égale durée, par exemple en tranches de l'ordre d'une seconde, et qui comparent périodiquement le nombre d'impulsions émises par le capteur de déplacement au nombre d'impulsions qu'il émettrait en un seconde à la vitesse de conjonction, c'est-à-dire à 2,5 vont fonctionner avec une très mauvaise précision.

Les dispositifs de choix selon l'invention remédient à ces inconvénients en utilisant un procédé qui consiste à diviser la course du taxi en tranches successives de même longueur et de durée inégale, et plus précisément en tranches qui correspondent à la distance parcourue par le taxi entre deux impulsions, successives ou non, du compteur de distance. Dans l'exemple numérique choisi, on divise la course en tranches de 1 m de longueur.

On compte les impulsions d'horloge pendant chaque tranche et on les compare à une valeur de référence, qui est égale au nombre d'impulsions qui seraient émises par l'horloge si le taxi se déplaçait à la vitesse de conjonction.

Dans l'exemple numérique choisi, à la vitesse de conjonction de 9 Km/heure, le taxi parcourt 2,5 m/seconde et pendant la durée de parcours d'une tranche de 1 mètre, l'horloge émet 400 impulsions. On voit tout de suite qu'au voisinage de la vitesse de conjonction, la comparaison effectuée portera sur un nombre voisin de 400 et qu'une erreur d'une ou deux impulsions entraînera une erreur relative très faible, nettement inférieure à 1%.

Si la comparaison fait apparaître, pendant le parcours d'une tranche, un nombre d'impulsions d'horloge supérieur à la valeur de référence, le taxi se déplace à une vitesse inférieure à la vitesse de conjonction et on décompte cette tranche au tarif horaire. Dans le cas contraire, on la décompte au tarif kilométrique. Dans les deux cas, on additionne le prix de la tranche écoulée au prix déjà enregistré et le prix total est enregistré dans un totalisateur qui est connecté à un afficheur lumineux par des circuits connus.

La figure 2 représente un mode de réalisation, en composants discrets, d'un dispositif selon l'invention de découpage en tranche et de détermination du prix de chaque tranche. On a choisi un exemple de réalisation en composants discrets pour la clarté de l'exposé. Il est évident que les composants discrets peuvent être incorporés dans des unités de calcul ou de mémoire en circuits intégrés telles que les unités 1 à 3 de la figure 1.

On retrouve sur la figure 2, une horloge 5 et un capteur 6 de déplacement du taxi. L'horloge 5 est connectée sur un compteur d'impulsions binaires 12 dont les sorties binaires sont connectées sur un registre R1. La sortie du capteur 6 est connectée en parallèle sur le registre R1 et sur la remise à zéro du compteur 12. Chaque fois que le capteur 6 émet une impulsion, celle-ci commande le transfert et la mise en mémoire dans le registre R1 du nombre n1 d'impulsions comptées par le compteur 12 et la remise à zéro du compteur 12 qui reprend immédiatement un nouveau comptage d'impulsions d'horloge. Ainsi, lors de chaque impulsion émise par le capteur 6, on transfère dans le registre R1 un nombre binaire n1 égal au nombre d'impulsions d'horloge émises entre deux impulsions de distance, successives ou non, c'est-à-dire un nombre d'impulsions d'horloge qui mesure la durée variable mise par le taxi pour parcourir une tranche de parcours de longueur constante.

Le dispositif comporte un deuxième registre R2 dans lequel est inscrit, en binaire, une valeur de référence égale au nombre n2 d'impulsions qui seraient émises par l'horloge, pendant le parcours d'une tranche qui serait parcourue à la vitesse de conjonction, par exemple un nombre égal à 400 dans l'exemple numérique choisi.

Le repère R3 représente un troisième registre dans lequel est inscrit, en binaire, un nombre p2 égal au prix de l'unité de distance parcourue par le taxi entre deux impulsions de distance successives ou non. Dans l'exemple numérique choisi, la distance parcourue entre deux impulsions de distance est de 1 mètre et le prix unitaire enregistré dans le registre R3 et égal à 0,4 centimes.

Le repère R4 représente un quatrième registre dans lequel est inscrit en binaire un chiffre égal au prix p1 de la durée qui s'écoule entre deux impulsions d'horloge successives. Dans l'exemple numérique choisi, on inscrit dans R4 le chiffre 0,001 centime, le prix d'une milliseconde d'occupation du taxi.

Les registres R1, R2, R3, R4 sont par exemple des sections de mémoires de type RAM en circuits intégrés.

Le repère 13 représente un circuit multiplicateur binaire qui est connecté, d'une part, sur la sortie du registre R1 et, d'autre part, sur le registre R4 et qui effectue le produit du nombre n1, inscrit dans le registre R1, par le prix unitaire p1 inscrit dans le registre R4. Le produit n1.p1 représente le coût de la durée de parcours d'une tranche tandis que le prix p2 représente le coût de la distance constante parcourue pendant une tranche.

On remarquera que p2=n2.p1 par définition de la vitesse de conjonction.

Les sorties binaires du registre R3 et du multiplicateur 13 sont connectées sur un circuit démultiplexeur 14 qui est un circuit sélecteur du type connu dit deux vers un, qui permet d'aiguiller vers des sorties binaires, soit l'une, soit l'autre de deux informations binaires entrant dans le circuit. L'aiguillage est commandé par un signal logique délivré par un comparateur 15 qui compare les nombres n1 et n2 inscrits dans le registres R1 et R2. Si n1 est supérieur à n2, le signal logique délivré par le comparateur 15 aiguille vers la sortie du sélecteur 14 le produit n1.p1 délivré par multiplicateur 13. Si, au contraire, n1<n2, le signal logique délivré par le comparateur 15 aiguille vers la sortie du sélecteur 14 le prix p2 inscrit dans le registre R3. La sortie du sélecteur 14 est connectée sur un compteur totalisateur 19 dans lequel le nombre délivré par le sélecteur 14 est additionné au nombre précédemment enregistré. Les sorties binaires du totalisateur 19 sont connectées par des circuits connus 10 sur un afficheur lumineux 11 sur lequel apparaît le prix de la course. Bien entendu, après chaque comparaison, le registre R1 est remis à zéro jusqu'à la prochaine impulsion de distance.

Comme on le voit, le dispositif selon la figure 2 effectue un découpage en tranches successives et une sélection du prix à appliquer à chaque tranche, qui sont commandés par les impulsions émises par le capteur 6. Lorsque le taxi est occupé à l'arrêt, le capteur 6 n'émet aucune impulsion et il faut donc adjoindre au dispositif qui vient d'être décrit, um circuit supplémentaire qui permet de prendre en compte le temps d'occupation du taxi dès que la vitesse de déplacement du taxi devient nettement inférieure à la vitesse de conjonction.

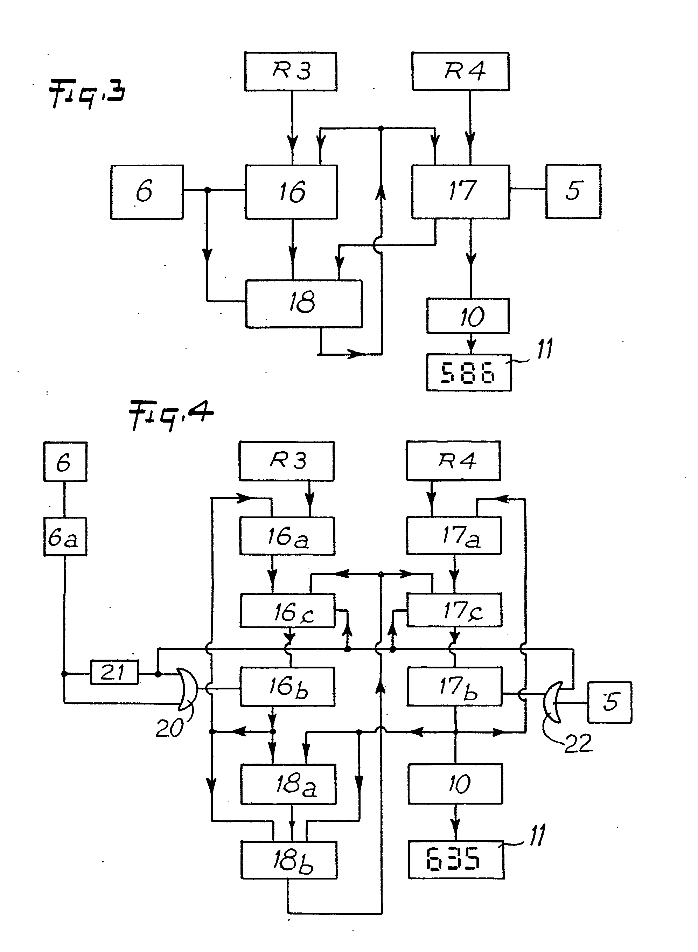

La figure 3 représente une variante de réalisation d'un dispositif qui met en oeuvre le procédé selon l'invention de découpage d'une course de taxi en tranches successives d'égale longueur et qui permet de remédier à l'adjonction d'un circuit supplémentaire, dans le cas où le taxi est occupé à l'arrêt.

Le repère 5 représente l'horloge électronique et le repère 6 le capteur de déplacement. Les repères R3 et R4 représentent, comme dans la figure 2, des registres dans lesquels sont inscrits respectivement le prix p2 de l'unité de déplacement correspondant à la longueur constante de chaque tranche de la course et le prix p1 de l'unité de temps qui s'écoule entre deux impulsions d'horloge successives.

La sortie du capteur 6 et le registre R3 sont connectés sur un circuit additionneur 16 et, chaque fois que le capteur 6 émet une impulsion, le contenu du circuit additionneur 16 est augmenté d'un échelon égal au prix p2 inscrit dans R3.

De même, l'horloge 5 et le registre R4 sont connectés sur un circuit additionneur 17 et, chaque fois que l'horloge émet une impulsion, le contenu du circuit additionneur 17 est augmenté d'un échelon égal au prix p1 inscrit dans R4.

Le dispositif comporte un circuit logique de sélection et d'aiguillage 18, qui remplit un rôle équivalent à celui des circuits 14 et 15 de la figure 2 et qui est composé, d'une part, d'un comparateur qui compare les nombres inscrits dans les totalisateurs 16 et 17 et, d'autre part, d'un démultiplexeur de type deux vers un. Le circuit 18 est connecté, d'une part, sur les sorties des additionneurs 16 et 17 et d'autre part, sur la sortie du capteur 6. Chaque fois que le capteur 6 émet une nouvelle impulsion, celle-ci commande le comparateur inclus dans le circuit 18 qui compare les nombres inscrits dans les additionneurs 16 et 17 et qui aiguille vers la sortie du circuit le plus fort des deux.

La sortie du circuit 18 est rebouclée en parallèle sur les deux additionneurs 16 et 17 et la valeur sélectionnée vient s'inscrire dans les deux additionneurs à la place de la valeur qui se trouvait précédemment dans ceux-ci. On a donc inscrit dans les deux additionneurs 16 et 17 un même prix P au début de chaque tranche et, à la fin de chaque tranche, le circuit 18 compare donc un prix P+p2 inscrit dans l'additionneur 16 à un prix P+n1.p1 inscrit dans l'additionneur 17, n1 étant le nombre d'impulsions émises par l'horloge 5 pendant la tranche. On voit donc que la comparaison s'établit uniquement entre, d'une part, p2 et, d'autre part, n1.p1 puisque le même terme P se retrouve des deux côtés.

A la fin de chaque tranche élémentaire, on compare deux prix partiels de cette tranche correspondant, l'un, p2, à la longueur de la tranche et, l'autre, n1.p1 à la durée de parcours de la tranche et l'on choisit le plus élevé de ces deux prix partiels que l'on inscrit dans lef deux additionneurs 16 et 17.

Si par exemple le taxi a parcouru une tranche à une vitesse inférieure à la vitesse de conjonction, n1.p1 est supérieur à p2 et on inscrit donc dans les deux additionneurs 16 et 17, à la fin de la tranche, une même valeur P+n1.p1 qui représente le prix total de la course à la fin de la tranche.

L'additionneur 17 sert de totalisateur et il est connecté par des circuits 10 connus sur un afficheur lumineux 11 où apparaît le prix total de la course selon les particularités des réglementations en vigueur.

Si le taxi est à l'arrêt, le prix inscrit dans l'additionneur 17 continue automatiquement à augmenter par échelons égaux au prix d'une unité de temps d'attente, chaque fois qui l'horloge 5 émet une impulsion.

Au moment du règlement de la course, l'arrêt du comptage de prix est instantané, à une milliseconde près, ce qui supprime des causes d'erreur sur le prix.

La figure 4 représente un mode de réalisation des circuits de la figure 3.

On retrouve sur la figure 4, les registres R3 et R4, le capteur 6 qui est connecté éventuellement sur un diviseur de fréquence programmable 6a et l'horloge 5.

Les circuits 16 et 17 de la figure 3 comportent chacun trois circuits 16a, 16b, 16c et 17a, 17b, 17c.

Les circuits 16a, 17a sont des additionneurs.

Les circuits 16b, 17b sont des registres ou mémoires.

Les circuits 16c, 17c sont des multiplexeurs du type deux vers un.

La sortie du registre 16b est rebouclée sur une entrée de l'additionneur 16a de même que la sortie du registre 17b est rebouclée sur une entrée de l'additionneur 17a.

L'additionneur 16a effectue en permanence la somme du prix p2 inscrit dans le registre R3 et du nombre inscrit dans le registre 16b. De même pour l'additionneur 17a.

Le circuit 18 de la figure 3 est composé d'un comparateur 18a et d'un démultiplexeur 18b du type deux vers un. La sortie binaire du registre 16b est connectée en parallèle sur une entrée du comparateur 18a et sur une entrée du démultiplexeur 18b. De même la sortie binaire du registre 17b est connectée en parallèle sur la deuxième entrée du comparateur 18a et sur la deuxième entrée du démultiplexeur 18b. La sortie du démultiplexeur 18b est rebouclée en parallèle sur une entrée de chacun des deux démultiplexeurs 16c et 17c.

La sortie du diviseur de fréquence 6a est connectée sur une entrée d'une porte OU 20 et sur un circuit retardateur 21, par exemple un monostable, dont la sortie est connectée en parallèle sur le deuxième entrée de la porte OU 20, sur la commande d'aiguillage des multiplexeurs 16c et 17c et sur une entrée d'une porte OU 22, sur une deuxième entrée de laquelle est également connectée l'horloge 5. La sortie de la porte OU 20 est connectée sur la borne de validation de chargement du registre 16b et la sortie de la port OU 22 est connectée sur la borne de validation de chargement du registre 17b.

Le fonctionnement est le suivant.

En l'absence d'impulsions sortant su diviseur de fréquence 6a, l'aiguillage du démultiplexeur 17c sélectionne la sortie de l'additionneur 17a. Chaque fois que l'horloge 5 émet une impulsion, celle-ci commande le transfert dans le registre 17b du contenu de l'additionneur 17a qui est égal au contenu immédiatement précédent du registre 17b augmenté d'un échelon p1 contenu dans le registre R4.

Lorsque le diviseur de fréquence 6a émet une impulsion, celle-ci agit immédiatement sur la commande de chargement du registre 16b et, comme le démultiplexeur 16c est également dans la position où il sélectionne l'information venant de l'additionneur 16a, le registre 16b reçoit le contenu de l'additionneur qui est égal au contenu immédiatement précédent du registre 16a augmenté d'un échelon égal au prix unitaire p2 inscrit dans le registre R3.

En permanence, le comparateur 18a compare les deux nombres inscrits dans le registres 16b et 17b et commande le démultiplexeur 18b, de sorte que ce dernier aiguille en parallèle vers le deuxièmes entrées des démultiplexeurs 16c et 17c, le plus grand des deux nombres.

Après un léger retard dû au circuit 21, celui-ci émet une deuxième impulsion qu parvient sur la commande d'aiguillage des démultiplexeurs 16c et 17c et qui fait basculer ceux-ci dans le sens qui sélectionne l'information parvenant de la sortie de 18b. En même temps, l'impulsion retardée traverse les portes 20 et 22 et commande le transfert simultané dans les deux registres 16b et 17b du plus grand des deux nombres précédemment inscrits dans le deux registres 16b et 17b.

Malgré des différences de structure, les dispositifs selon les figures 2, 3 et 4 mettent en oeuvre le même procédé.

En effet, le dispositif selon la figure 2, compare deux nombres n1 et n2 et sélectionne un prix partiel égal, soit à p2 si n2<n1, soit à n1.p1 si n1>n2. Or p2=n2.p1 par définition de la vitesse de conjonction qui est celle où les deux prix partiels d'une tranche élémentaire sont égaux.

La comparaison qui est faite entre n1 et n2 ne change pas si l'on multiplie les deux termes par le même nombre p1 et revient donc à comparer n1.p1 à n2.p1 qui est égal à p2, c'est-à-dire à comparer les prix partiels de chaque tranche élémentaire et à sélectionner le plus élevé des deux.

Le dispositif selon la figure 3 effectue la sélection en comparant deux nombres égaux respectivement à P+p2 et à P+n1.p1 et compare donc également un prix partiel n1.p1 qui est basé sur la durée de la tranche à un prix partiel p2 qui est basé sur la longueur constante de chaque tranche.

On voit donc que les deux dispositifs partent d'un même procédé qui permet de simplifier les circuits, qui consiste à diviser chaque course en tranches élémentaires d'égale longueur, qui peuvent être des tranches très courtes, de l'ordre d'un mètre ou même moins, de sorte que la vitesse instantanée du taxi ne peut pas s'écarter sensiblement de la vitesse moyenne au cours d'une tranche et à comparer ensuite les prix partiels de chaque tranche, c'est-à-dire un prix partiel p2 basé sur la distance parcourue qui est le même pour chaque tranche puisqu'elles ont toute la même longueur et un prix partiel n1.p1, qui est proportionnel à la durée n1 de chaque tranche.

Dans les exemples représentés sur les figures 2 et 3, le capteur de distance 6 est connecté directement sur le compteur 12 ou sur le circuit additionneur 16 et la course du taxi est divisée en tranches dont la longueur est constante et correspond à la distance parcourue par le taxi entre deux impulsions successives. Il est précisé que l'on peut intercaler un diviseur de fréquence programmable 6a entre le capteur 6 et les circuits 12 et R1 ou 16 et 18, de telle sorte que la course du taxi est divisée en tranches dont la longueur constante est égale à la distance parcourue par le taxi entre deux impulsions successives émises par le diviseur de fréquence, c'est-à-dire entre deux impulsions du capteur de distance qui sont séparées par un nombre constant d'impulsions que l'on peut faire varier selon les tarifs.

Le circuit de décodage 10 qui fait partie du dispositif d'affichage 11 reçoit à tout instant, sur ses entrées, le prix à payer exprimé en signaux logiques.

Ces signaux logiques peuvent être des signaux binaires ou bien ils peuvent être convertis en code décimal par l'utilisation d'un convertisseur bien connu (convertisseur B C D).

Le décodeur 10 est un circuit bien connu qui permet d'éclairer soit des modules lumineux à sept segments soit tout autre afficheur composé de modules lumineux ou de cristaux liquides.

Selon certaines réglementations, le prix affiché ne doit par varier de façon continue mais par sauts d'une valeur constante. Dans ce cas, les appareils selon l'invention peuvent être facilement adaptés en les associant à des circuits logiques connus ou par l'utilisation partielle d'un microprocesseur.

**Revendications**

1. Procédé pour calculer le prix d'une course en taxi affiché sur un taximètre électronique selon lequel on mesure la distance parcourue par le taxi au moyen d'un capteur de distance (6) qui émet un nombre d'impulsions proportionnel à cette distance et on mesure la durée d'une course au moyen d'une horloge électronique (5) qui émet des impulsions à fréquence constante et élevée et on compare le nombre variable (n1) d'impulsions émises par l'horloge entre deux impulsions successives de capteur de distance à un nombre constant (n2) égal au nombre d'impulsions émises par l'horloge entre deux impulsions successives du capteur de distance lorsque le taxi circule à la vitesse de conjonction, caractérisé en ce que:

— on enregistre dans le taximètre un premier prix unitaire (p2) qui est le prix de l'unité de distance parcourue par le taxi entre deux impulsions successives du capteur de distance et un deuxième prix unitaire (p1) qui est le prix de l'unité de temps égale à une période d'horloge;

— on compte et on enregistre le nombre variable (n1) d'impulsions émises par l'horloge entre deux impulsions successives émises par le capteur de distance;

— on multiple ledit nombre variable (n1) par ledit deuxième prix unitaire (p1);

— si ledit nombre variable (n1) est supérieur audit nombre constant (n2), on sélectionne le produit (n1.p1) comme prix partiel de la tranche parcourue entre deux impulsions successives du capteur de distance;

— si ledit nombre variable (n1) est inférieur audit nombre constant (n2), on sélectionne ledit premier prix unitaire (p2) comme prix partiel de la tranche parcourue entre deux impulsions successives du capteur de distance,

— de sorte que, dans tous les cas, on sélectionne comme prix partiel de chaque tranche de parcours le plus élevé des deux prix partiels (n1.p1) et (p2);

— et on calcule le prix total que l'on affiche en additionnant lesdits prix partiels.

2. Procédé pour calculer le prix d'une course en taxi que l'on affiche sur un taximètre électronique selon lequel on mesure la distance parcourue par le taxi au moyen d'un capteur de distance (6) qui émet un nombre d'impulsions proportionnel à cette distance et on mesure la durée d'une course au moyen d'une horloge électronique (5) qui émet des impulsions à fréquence constante et élevée, caractérisé en ce que:

— on connecte sur un premier circuit additionneur (16), d'une part, un premier registre (R3) dans lequel est inscrit un premier prix unitaire (p2) qui est le prix de l'unité de distance parcourue par le taxi entre deux impulsions successives du capteur de distance et, d'autre part, ledit capteur (6) et on augmente le contenu dudit premier circuit additionneur (16) d'une valeur égale audit premier prix unitaire (p2) chaque fois que ledit capteur émet une impulsion;

— on connecte sur un deuxième circuit additionneur (17), d'une part, un deuxième registre (R4) dans lequel est inscrit un deuxième prix unitaire (p1) qui est le prix de l'unité de temps égale à une période d'horloge et, d'autre part, ladite horloge (5) et on augmente le contenu dudit deuxième circuit additionneur (17) d'une valeur égale audit deuxième prix unitaire (p1) chaque fois que l'horloge émet une impulsion;

— on connecte les sorties desdits circuits additionneurs (16 et 17) sur un circuit d'aiguillage sélectif (18) comportant un comparateur qui compare les nombres inscrits dans les deux additioneurs et un démultiplexeur qui aiguille vers la sortie le plus fort des deux;

— et on reboucle la sortie dudit circuit d'aiguillage en parallèle sur lesdits circuits additionneurs (16 et 17), de sorte qu'après chaque impulsion émise par ledit capteur (6), le plus fort des deux chiffres inscrits dans les deux circuits additionneurs, vient s'inscrire dans les deux circuits additionneurs et on connecte la sortie du deuxième circuit additionneur (17) sur un dispositif d'affichage lumineux (10, 11).

3. Taximètre électronique du type comportant un capteur de distance (6) qui émet des impulsions dont le nombre est proportionnel à la distance parcourue par le taxi, une horloge électronique (5) et des moyens pour comparer la vitesse du taxi à la vitesse de conjonction qui comportent un compteur binaire (12) qui reçoit les impulsions d'horloge et un comparateur (15) qui compare le nombre variable (n1) d'impulsions reçues entre deux impulsions successives de distance à un nombre constant (n2) qui est égal au nombre d'impulsions émises par l'horloge entre deux impulsions successives de distance lorsque le taxi circule à la vitesse de conjonction, caractérisé en ce qu'il comporte, en outre:

— un premier registre (R1) qui est connecté sur les sorties binaires dudit compteur binaire (12) et la sortie dudit capteur de distance (6) est connectée en parallèle sur les bornes de transfert dudit compteur binaire (12) est dudit premier registre (R1);

— un deuxième registre (R2) dans lequel est inscrit un nombre constant (n2) égal au nombre d'impulsions émises par l'horloge (5) entre deux impulsions de distance lorsque le taxi circule à la vitesse de conjonction;

— un troisième registre (R3) dans lequel est inscrit un nombre (p2) égal au prix unitaire de la distance constante parcourue par le taxi entre deux impulsions successives dudit capteur de distance;

— un quatrième registre (R4) dans lequel est inscrit un nombre (p1) égal au prix unitaire d'une durée d'occupation égale à la période de l'horloge;

— un circuit multiplicateur (13) qui est connecté sur les sorties du quatrième registre et du premier registre et qui effectue le produit (n1.p1) lors de chaque impulsion du capteur de distance;

— un circuit démultiplexeur (14) comportant deux groupes d'entrées qui sont connectées respectivement sur les sorties du troisième registre (R3) et dudit circuit multiplicateur (13) et qui est commandé par un signal logique émis par ledit compareteur (15) de telle sorte que lors de chaque impulsion émise par le capteur de distance, il transmet le produit (n1.p1 si (n1) est supérieur à (n2) et il transmet le prix (p2) inscrit dans le troisième registre (R3) si (n1) est inférieur à (n2);

— et un compteur totalisateur (19) qui est connecté sur les sorties dudit circuit démultiplexeur.

4. Taximètre électronique du type comportant un capteur de distance (6) qui émet des impulsions dont le nombre est proportionnel à la distance parcourue par le taxi, une horloge électronique (5) et des moyens pour comparer la vitesse du taxi à une vitesse de conjonction, caractérisé en ce qu'il comporte:

— un premier registre (R3) dans lequel est inscrit un premier nombre constant (p2) égal au prix unitaire de la distance constante parcourue par le taxi entre deux impulsions successives dudit capteur de distance (6);

— un deuxième registre (R4) dans lequel est inscrit un deuxième nombre constant (p1) égal au prix unitaire d'une durée d'occupation égale à la période de l'horloge;

— un premier circuit additionneur (16) sur lequel sont connectés ledit capteur de distance (6) et ledit premier registre (R3);

— un deuxième circuit additionneur (17) sur lequel sont connectés ladite horloge (5) et ledit deuxième registre (R4), ledit premier et deuxième circuit additionneur étant du type dont le contenu est augmenté pas à pas d'un échelon égal respectivement au premier nombre constant (p1) ou au deuxième nombre constant (p2) chaque fois qu'il reçoit une impulsion respectivement dudit capteur de distance (5) ou de ladite horloge (5);

— un circuit logique sélecteur (18) comportant des entrées connectées sur les sorties des deux additionneurs (16, 17) et une borne de commande connectée sur la sortie dudit capteur de distance (6) lequel circuit sélecteur compare les nombres inscrits dans les deux circuits additionneurs (16, 17) chaque fois qu'il reçoit une impulsion de capteur de distance (6) et laisse passer le plus grand des deux vers une sortie qui est rebouclée en parallèle sur lesdits additionneurs (16, 17), de sorte qu'après chaque impulsion émise par ledit capteur de distance (6), chaque additionneur (16, 17) contient un même nombre égal à la somme du nombre P qui s'y trouvait après la précédente impulsion augmenté du plus grand des deux nombres (p2 et n1.p1) qui ont été enregistrés respectivement dans les deux additionneurs (16, 17) entre deux impulsions successives dudit capteur de distance (6), le nombre (n1) étant le nombre variable d'impulsions d'horloge émises entre deux impulsions successives du capteur de distance et le deuxième additionneur (17) est connecté sur un afficher lumineux (11) qui affiche le prix total de la course.

**Patentansprüche**

1. Verfahren zum Berechnen des auf einem elektronischen Taxameter aufgezeigten Preises einer Taxifahrt, bei welchem die vom Taxi zurückgelegte Wegstrecke mittels eines Distanzaufnehmers (6), der eine zu dieser Wegstrecke proportionale Anzahl von Impulsen abgibt, und die Dauer einer Fahrt mittels einer elektronischen Uhr (5), die Impulse mit konstanter und höherer Frequenz abgibt, gemessen werden und die variable Anzahl (n1) an von der Uhr zwischen aufeinanderfolgenden, vom Distanzaufnehmer abgegebenen Impulsen mit einer konstanten Zahl (n2), die gleich der Anzahl an von der Uhr zwischen zwei aufeinanderfolgenden Impulsen des Distanzaufnehmers abgegebenen Impulsen ist, wenn das Taxi mit der Konjunktionsgeschwindigkeit fährt, verglichen wird, dadurch gekennzeichnet, daß:

— man einen ersten Einheitspreis (p2) in den Taxameter einspeichert, welcher der Preis für die vom Taxi zwischen zwei aufeinanderfolgenden Impulsen des Distanzaufnehmers zurückgelegte Wegeinheit ist, und einen zweiten Einheitspreis (p1), welcher der Preis für die einer Uhrperiode entsprechende Zeiteinheit ist,

— man die variable Anzahl (n1) an Impulsen, die von der Uhr zwischen zwei aufeinanderfolgenden, vom Distanzaufnehmer abgegebenen Impulsen abgegeben werden, zählt und einspeichert;

— man die variable Anzahl (n1) mit dem zweiten Einheitspreis (p1) multipliziert;

— man, wenn die variable Anzahl (n1) höher als die konstante Zahl (n2) ist, das Produkt (n1.p1) als Teilpreis für den zwischen zwei aufeinanderfolgenden Impulsen des Distanzaufnehmers zurückgelegten Abschnitt wählt;

— man, wenn die variable Zahl (n1) niedriger als die konstante Zahl (n2) ist, den ersten Einheitspreis (p2) als Teilpreis für den zwischen zwei aufeinanderfolgenden Impulsen des Distanzaufnehmers zurückgelegten Abschnitt wählt,

— derart, daß man auf jeden Fall den höheren der beiden Teilpreise (n1.p1) und (p2) als Teilpreis für jeden Wegabschnitt wählt;

— und man durch Addieren der Teilpreise den Gesamtpreis berechnet, den man anzeigt.

2. Verfahren zum Berechnen des auf einem elektronischen Taxameter aufgezeigten Preises einer Taxifahrt, bei welchem die vom Taxi zurückgelegte Wegstrecke mittels eines Distanzaufnehmers (6), der eine zu dieser Wegstrecke proportionale Anzahl von Impulsen abgibt, und die Dauer einer Fahrt mittels einer elektronischen Uhr (5), die Impulse mit konstanter und höherer Frequenz abgibt, gemessen werden, dadurch gekennzeichnet, daß:

— man an einen ersten Additionskreis (16) einerseits ein erstes Register (R3), in welchem ein erster Einheitspreis (p2), der der Preis für die vom Taxi zwischen zwei aufeinanderfolgenden Impulsen das Distanzaufnehmers zurückgelegte Wegeinheit ist, gespeichert ist, und andererseits den Distanzaufnehmer (6) schaltet und den Inhalt des ersten Additionskreises (16) um einen Wert, der gleich dem ersten Einheitspreis (p2) ist, jedesmal, wenn der Aufnehmer einen Impuls abgibt, erhöht;

— man an einen zweiten Additionskreis (17) einerseits ein zweites Register (R4), in welchem ein zweiter Einheitspreis (p1), der der Preis für die einer Uhr-periode entsprechende Zeiteinheit ist, gespeichert ist, und andererseits die Uhr (5) schaltet und den Inhalt des zweiten Additionskreises (17) um einen Wert, der gleich dem zweiten Einheitspreis (p1) ist, jedesmal, wenn die Uhr einen Impuls abgibt, erhöht;

— man die Ausgänge der Additionskreise (16 und 17) an einen selektiven Verteilerkreis (18) schaltet, der einen Komparator, welcher die in den beiden Addierwerken gespeicherten Zahlen vergleicht, und einen Demultiplexer, der zum höheren Ausgang der beiden lenkt, umfaßt;

— und man den Ausgang des Verteilerkreises parallel an die Additionskreise (16 und 17) zur Schleife schaltet, sodaß nach jedem vom Aufnehmer (6) abgegebenen Impuls die höhere der beiden in den zwei Additionskreisen gespeicherten Ziffern in den beiden Additionskreisen gespeichert wird, und man den Ausgang des zweiten Additionskreises (17) an eine Leuchtanzeige (10, 11) anschließt.

3. Elektronisches Taxameter mit einem Distanzaufnehmer (6), der Impulse abgibt, deren Anzahl proportional zu der vom Taxi zurückgelegten Wegstrecke ist, einer elektronischen Uhr (5) und Mitteln zum Vergleichen der Geschwindigkeit des Taxis mit der Konjunktionsgeschwindigkeit, welche einen Binärzähler (12), der die Impulse von der Uhr empfängt, und einen Komparator (15), der die variable Zahl (n1) von zwischen zwei aufeinanderfolgenden Distanzimpulsen empfangenen Impulsen mit einer konstanten Zahl (n2), die gleich der Zahl an von der Uhr zwischen zwei aufeinanderfolgenden Distanzimpulsen abgegebenen Impulsen ist, wenn das Taxi mit der Konjunktionsgeschwindigkeit fährt, vergleicht, dadurch gekennzeichnet, daß es weiters umfaßt:

— ein erstes Register (R1), das an die Binärausgänge des Binärzählers (12) angeschlossen ist, und der Ausgang des Distanzaufnehmers (6) an die Übertragungsklemmen des Binärzählers (12) und des ersten Registers (R1) parallelgeschaltet ist;

— ein zweites Register (R2), in welchem eine konstante Zahl (n2) gespeichert ist, die gleich ist der Zahl an von der Uhr (5) zwischen zwei Distanzimpulsen abgegebenen Impulsen, wenn das Taxi mit der Konjunktionsgeschwindigkeit fährt;

— ein drittes Register (R3), in welchem eine Zahl (p2) gespeichert ist, die gleich ist dem Einheitspreis der vom Taxi zwischen zwei aufeinanderfolgenden Impulsen des Distanzaufnehmers abgegebenen Impulsen zurückgelegten konstanten Wegstrecke;

— ein viertes Register (R4), in welchem eine Zahl (p1) gespeichert ist, die gleich ist dem Einheitspreis einer der Uhrperiode entsprechenden Belegungsdauer;

— einen Multiplikatorkreis (13), der an die Ausgänge des vierten Registers und des ersten Registers angeschlossen ist und das Produkt (n1.p1) bei jedem Impuls des Distanzaufnehmers erstellt;

— einen Demultiplexerkreis (14) mit zwei Gruppen von Eingängen, die an die Ausgänge des dritten Registers (R3) bzw. des Multiplikatorkreises (13) angeschlossen sind, welcher durch ein vom Komparator (15) abgegebenen logisches Signal derart gesteuert wird, daß er bei jedem vom Distanzaufnehmer abgegebenen Impuls das Produkt (n1.p1) überträgt, wenn (n1) größer als (n2) ist, und den im dritten Register (R3) gespeicherten Preis (p2), wenn (n1) kleiner als (n2) ist;

— und einen Summenzähler (19), der an die Ausgänge des Demultiplexerkreises angeschlossen ist.

4. Elektronisches Taxameter mit einem Distanzaufnehmer (6), der Impulse abgibt, deren Anzahl proportional zu der vom Taxi zurückgelegten Wegstrecke ist, einer elektronischen Uhr (5) und Mitteln zum Vergleichen der Geschwindigkeit des Taxis mit der Konjunktionsgeschwindigkeit, dadurch gekennzeichnet, daß es umfaßt:

— ein erstes Register (R3), in welchem eine erste konstante Zahl (p2) gespeichert ist, die gleich ist dem Einheitspreis der konstanten, vom Taxi zwischen zwei aufeinanderfolgenden Impulsen des Distanzaufnehmers (6) zurückgelegten Wegstrecke;
— ein zweites Register (R4), in welchem eine zweite konstante Zahl (p1) gespeichert ist, die gleich ist dem Einheitspreis einer der Uhr-periode entsprechenden Belegungsdauer;
— einen ersten Additionskreis (16), an den der Distanzaufnehmer (6) und das erste Register (R3) angeschlossen sind;
— einen zweiten Additionskreis (17), an den die Uhr (5) und das zweite Register (R4) angeschlossen sind, wobei der erste und der zweite Additionskreis von solcher Bauart sind, daß deren Inhalt schrittweise um einen Sprung, der gleich ist der ersten konstanten Zahl (p1) bzw. der zweiten konstanten Zahl (p2), erhöht wird, jedesmal, wenn er einen Impuls des Distanzaufnehmers (6) bzw. der Uhr (5) empfängt;
— einen logischen Selektorkreis (18) mit Eingängen, die an die Ausgänge der beiden Additionswerke (16, 17) angeschlossen sind, und mit einer Steuerklemme, die an den Ausgang des Distanzaufnehmers (6) angeschlossen ist, welcher Selektorkreis die in den beiden Additionskreisen (16, 17) gespeicherten Zahlen vergleicht, jedesmal, wenn er einen Impuls vom Distanzaufnehmer (6) empfängt, und die größere der beiden zu einem Ausgang gelangen läß6, der parallel zu den Additionswerken (16, 17) zur Schleife geschaltet ist, sodaß nach jedem vom Distanzaufnehmer (6) abgegebenen Impuls jedes Additionswerk (16, 17) eine gleiche Zahl enthält, die gleich ist der Summe der Zahl (P), die sich dort nach dem vorhergehenden Impuls, erhöht um die größere der beiden jeweils in den beiden Additionswerken (16, 17) zwischen zwei aufeinanderfolgenden Impulsen des Distanzaufnehmers (6) gespeicherten Zahlen (p2 und n1.p1), befindet, wobei die Zahl (n1) die variable Anzahl an von der Uhr zwischen zwei aufeinanderfolgenden Impulsen des Distanzaufnehmers abgegebenen Impulsen ist und das zweite Additionswerk (17) an eine den Gesamtpreis der Fahrt anzeigende Leuchtanzeige (11) angeschlossen ist.

**Claims**

1. Methods for calculating a taxi fare displayed on an electronic taximeter according to which the distance travelled by the taxi is measured by means of a distance pick-up (6) which delivers a number of pulses proportional to said distance and the duration of the taxi run is measured by means of an electronic clock (5) which delivers pulses of constant and high frequency, and the variable number (n1) of pulses delivered by the clock between two successive pulses of the distance pick-up is compared with a constant number (n2) equal to the number of pulses delivered by the clock between two successive pulses of the distance pick-up when the taxi travels at the conjunction speed, characterized in that:

— in the taximeter is recorded a first unit price (p2) which is the price of the distance unit travelled by the taxi between two successive pulses of the distance pick-up and a second unit price (p1) which is the price of the time unit equal to a clock period;
— the variable number (n1) of pulses delivered by the clock between two successive pulses delivered by the distance pick-up is counted and recorded;
— said variable number (n1) is multiplied by said second unit price (p1);
— if said variable number (n1) is greater than said constant number (n2), the product (n1.p1) is selected as partial price of the portion travelled between two successive pulses of the distance pick-up;
— if said variable number (n1) is smaller than constant number (n2), said first unit price (p2) is selected as partial price of the portion travelled between two successive pulses of the distance pick-up;
— in such a way that, in any case, the higher of these two partial prices (n1.p1) and (p2) is selected as partial price of each portion travelled;
— and the total fare is calculated by adding up the said partial prices and is displayed.

2. Methods for calculating the price of a taxifare which is displayed on an electronic taximeter according to which the distance travelled by the taxi is measured by means of a distance pick-up (6) which delivers a number of pulses proportional to said distance and the duration of the taxi run is measured by means of an electronic watch (5) which delivers pulses of constant and high frequency, characterized in that:

— to a first adder circuit (16) are connected first a register (R3) in which is recorded a first unit price (p2) which is the price of the unit distance travelled by the taxi between two successive pulses of the distance pick-up, and second said pick-up, and the content of said first adder circuit (16) is increased by a value equal to first unit price (p2) every time the clock delivers a pulse;
— to a second adder circuit (17) are connected, first a second register (R4) in which is recorded the unit price (p1) which is the price of the time unit equal to a clock period, and second the said clock (5), and the content of the second adder is increased by a value equal to said first unit price (p2) every time the clock delivers a pulse;

— the outputs of the said adders (16 and 17) are connected to a selective switching circuit (18) comprising a comparator comparing the numbers recorded in the two counters and a demultiplexer which routs towards the output terminal the higher of the two;

— the output of the said switching circuit is reconnected in parallel on the said adder circuits (16 and 17) so that after each pulse delivered by the said pick-up (6), the higher of the two figures recorded in the said adder circuits comes to be recorded in the two adder circuits, and the output of the second adder circuit (17) is connected to a luminous display device (10, 11).

3. An electronic taximeter of the type comprising a distance pick-up (6) which delivers a number of pulses proportional to the distance travelled by the taxi, an electronic clock (5) and means for comparing the speed of the taxi with the conjunction speed which comprises a binary counter (12) which receives the clock pulses and a comparator (15) which compares the variable number (n1) of pulses received between two successive distance pulses with a constant number (n2) equal to the number of pulses delivered by the clock between two successive distance pulses when the taxi moves at the conjunction speed, characterized in that it further comprises:

— a first register (R1) which is connected to the binary outputs of said binary counter (12) and the output of distance pick-up (6) is connected in parallel to the output terminals of said binary counter (12) and said first register (R1);

— a second register (R2) in which is recorded a constant number (n2) equal to the number of pulses delivered by the clock (5) between two distance pulses when the taxi travels at the conjunction speed;

— a third register (R3) in which is recorded a number (p1) equal to the unit price of the constant distance travelled by the taxi between two successive pulses of said distance pick-up.

— a fourth register (R4) in which is recorded a number (p1) equal to the unit price of a hired duration equal to the clock-period;

— a multiplier circuit (13) which is connected to the outputs of the fourth and the first registers and calculates the product (n1.p1) every time the distance pick-up delivers a pulse;

— and a demultiplexer circuit (14) comprising two input groups which are connected respectively to the outputs of third register (R3) and of said multiplier circuit (13) and which is controlled by a logic signal delivered by the said comparator (15), so that when the distance pick-up delivers a pulse, it transmits the product (n1.p1) if (n1) is higher than (n2) and it transmits the price (p2) recorded in the third register (R3) if (n1) is smaller than (n2);

— and a totalizing counter (19) which is connected to the outputs of said demultiplexer circuit.

4. An electronic taximeter of the type comprising a distance pick-up (6) which delivers a number of pulses proportional to the distance travelled by a taxi, an electronic clock (5) and means for comparing the taxi speed with a conjunction speed, characterized in that it comprises:

— a first register (R3) in which is recorded a first constant number (p2) equal to the unit price (p2) of the constant distance travelled by the taxi between two successive pulses delivered by said distance pick-up (6);

— a second register (R4) in which is recorded a second constant number (p1) equal to the unit price, of a hired duration equal to the period of the said clock;

— a first adder circuit (16) to which are connected said distance pick-up (6) and said first register (R3);

— a second adder circuit (17) to which are connected said clock (5) and said second register (R4), said first and second adder circuit being of the type whose content is increased by one step equal respectively to the first constant number (p1) or to the second constant number (p2) every time it receives a pulse respectively from the distance pick-up (6) or from said clock (5);

— a selecting logic circuit (18) comprising two input terminals connected to the outputs of the two adders (16, 17) and a control terminal connected to the output of said distance pick-up (6) which selecting circuit compares the numbers recorded in the two adder circuits (16, 17) every time it receives a pulse from the distance pick-up (6) and lets through the higher of the two numbers towards an output which is reconnected in parallel on said adders (16, 17) so that after each pulse delivered by said distance pick-up (6), the same number equal to the number P is found in the two adders (16, 17) which was there after the preceding pulse, increase by the higher of the two numbers (p2 and n1.p1) recorded respectively in the two adders (16, 17) between two successive pulses of the distance pick-up (6), the number (n1) being the variable number of clocks pulses delivered between two successive pulses of the distance pick-up and the second adder (17) is connected to the luminous display means (11) which displays the total price of the fare.

Fig.1

Fig.2

Fig.3

Fig.4